# EUROPEAN PATENT APPLICATION

(11) **EP 4 746 116 A1**
(43) Date of publication of application: **20.05.2026**
(21) Application number: 24874118.3
(22) Date of filing: 08.11.2024
(51) Int. Cl.: H01M 10/48, H01M 50/569

(54) **TEMPERATURE COLLECTION APPARATUS, BATTERY MANAGEMENT SYSTEM, AND BATTERY APPARATUS**

(30) Priority: 09.01.2024 CN 202420056374 U
(71) Applicant: Eve Energy Co., Ltd., Huizhou, Guangdong 516006 (CN)
(72) Inventor: YAN, Huaping, Huizhou, Guangdong 516006 (CN); ZHOU, Hongquan, Huizhou, Guangdong 516006 (CN)
(74) Representative: Cabinet Beaumont
(86) International application number: PCT/CN2024/130743
(87) International publication number: WO 2025/073302

(57) **Abstract**

Provided are a temperature acquisition device, a battery management system, and a battery device. The temperature acquisition device includes an acquisition module (10) and a control module (20). The acquisition module (10) is configured to be connected to a cell (30) of a battery assembly (40) and acquire temperature information of the cell (30) and a first potential signal of the cell (30). The control module (20) is connected to the acquisition module (10) and configured to determine whether the position of the acquisition module (10) is a preset position according to the first potential signal of the cell (30). In this solution, the acquisition module is configured to acquire the temperature information of the cell and the first potential signal of the cell, and the control module is configured to determine whether the position of the acquisition module is the preset position, thereby improving the accuracy of the temperature information acquired by the temperature acquisition device.

## Description

This application claims priority to Chinese Patent Application No. 202420056374.4 filed with the China National Intellectual Property Administration (CNIPA) on Jan. 9, 2024, the disclosure of which is incorporated herein by reference in its entirety.

### TECHNICAL FIELD

The present application relates to the field of battery technologies, for example, a temperature acquisition device, a battery management system, and a battery device.

### BACKGROUND

A temperature acquisition device is usually disposed in a battery assembly to acquire the temperature of the battery assembly. The temperature of the battery assembly may be used in analyzing and adjusting the performance of the battery assembly.

### TECHNICAL PROBLEM

In the related art, a temperature acquisition device often has an installation position that deviates from the designated position, resulting in difficulty in accurately reflecting the actual temperature of a battery, thereby affecting the operational performance of the battery.

### TECHNICAL SOLUTION

In a first aspect, the present application provides a temperature acquisition device. The temperature acquisition device includes an acquisition module and a control module.

The acquisition module is configured to be connected to a cell of a battery assembly and acquire temperature information of the cell and a first potential signal of the cell.

The control module is connected to the acquisition module, and the control module is configured to determine whether the position of the acquisition module is a preset position according to the first potential signal of the cell.

In a second aspect, the present application provides a battery management system. The battery management system includes the temperature acquisition device.

In a third aspect, the present application provides a battery device. The battery device includes the battery management system and the battery assembly.

### BENEFICIAL EFFECTS

The temperature acquisition device of the present application includes the acquisition module and the control module. The acquisition module is configured to be connected to the cell of the battery assembly. The control module is connected to the acquisition module. The acquisition module is also configured to acquire the temperature information of the cell and the first potential signal of the cell. The control module is configured to determine whether the position of the acquisition module is the preset position according to the first potential signal of the cell. In the temperature acquisition device of the present application, the acquisition module is configured to acquire the temperature information of the cell and the first potential signal of the cell, and the control module is configured to determine whether the position of the acquisition module is the preset position, thereby improving the accuracy of the temperature information acquired by the temperature acquisition device.

### BRIEF DESCRIPTION OF DRAWINGS

FIG. 1A is a diagram illustrating the structure of a temperature acquisition device according to embodiments of the present application.
FIG. 1B is a diagram illustrating the structure of a temperature acquisition device and a battery assembly that are connected according to embodiments of the present application.
FIG. 2 is a diagram illustrating the structure of a temperature acquisition device according to embodiments of the present application.
FIG. 3 is a diagram illustrating the structure of a battery management system according to embodiments of the present application.
FIG. 4 is a diagram illustrating the structure of a battery device according to embodiments of the present application.

### DETAILED DESCRIPTION

Terms such as "first" and "second" in the description, claims and drawings of the present application are used to distinguish between similar objects and are not necessarily used to describe a particular order or sequence. It is to be understood that data used in this manner are interchangeable where appropriate so that the embodiments of the present application described herein can be implemented in an order not illustrated or described herein. Additionally, terms "including" and "having" and any variations thereof are intended to encompass a non-exclusive inclusion. For example, the present application not only includes a process, method, system, product or device in a series of steps or units listed in embodiments of the present application but may also include a series of steps or units that are not expressly listed in embodiments of the present application or a system, a product, a device, or a process or method therein.

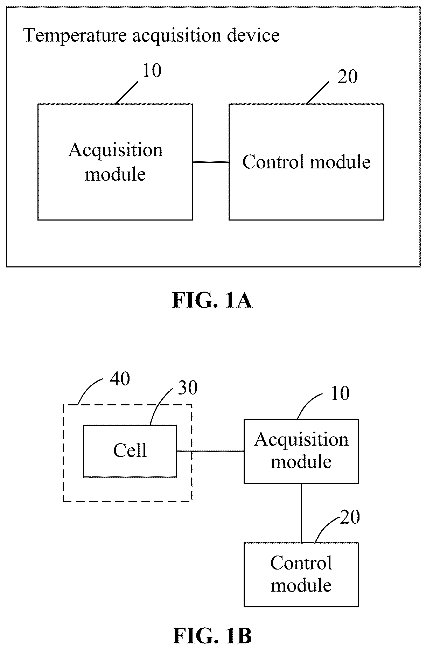

FIG. 1A is a diagram illustrating the structure of a temperature acquisition device according to embodiments of the present application. FIG. 1B is a diagram illustrating the structure of a temperature acquisition device and a battery assembly that are connected according to embodiments of the present application. Referring to FIG. 1A and FIG. 1B, the temperature acquisition device of this embodiment of the present application includes an acquisition module 10 and a control module 20. The acquisition module 10 is configured to be connected to a cell 30 of a battery assembly 40 and acquire temperature information of the cell 30 and a first potential signal of the cell 30. The control module 20 is connected to the acquisition module 10, and the control module 20 is configured to determine whether the position of the acquisition module 10 is a preset position according to the first potential signal of the cell 30.

The temperature acquisition device is configured to acquire the temperature information of the cell 30 of the battery assembly 40. The temperature acquisition device is connected to the cell 30 through the acquisition module 10. The acquisition module 10 can acquire the temperature information of the cell 30 and the first potential signal at the position of the cell 30 and output the temperature information and the first potential signal to the control module 20. The control module 20 is connected to the acquisition module 10. The control module 20 can determine whether the position of the acquisition module 10 is the preset position according to the first potential signal of the cell 30. For example, the control module 20 can determine the voltage value of the cell 30 connected to the acquisition module 10 according to the first potential signal and determine whether the position of the acquisition module 10 is the preset position according to the comparison result between the voltage value of the cell 30 and the preset value. When the position of the acquisition module 10 is the preset position, the control module 20 can determine that the temperature information of the cell 30 is the temperature information at the preset position and can use this temperature information to adjust the performance of the battery assembly 40.

By way of example, when the acquisition module 10 is connected to the battery assembly 40, the acquisition module 10 acquires the temperature information of the cell 30 and the first potential signal at the position of the cell 30 and outputs the temperature information and the first potential signal to the control module 20. The control module 20 determines the voltage value of the cell 30 connected to the acquisition module 10 according to the first potential signal and determines whether the position of the acquisition module 10 is the preset position according to the comparison result between the voltage value of the cell 30 and the preset value. When the position of the acquisition module 10 is the preset position, the control module 20 determines that the temperature information of the cell 30 is the temperature information at the preset position and adjusts the performance of the battery assembly 40 according to the temperature information of the cell 30.

In the temperature acquisition device of this embodiment of the present application, the acquisition module 10 and the control module 20 are provided. The control module 20 can determine the acquired first potential signal of the cell 30 and determine whether the position of the acquisition module 10 is the preset position according to the first potential signal. The control module 20 can adjust the performance of the battery assembly 40 according to the temperature information of the cell 30 at the preset position, thereby improving the accuracy of the temperature information acquired by the temperature acquisition device.

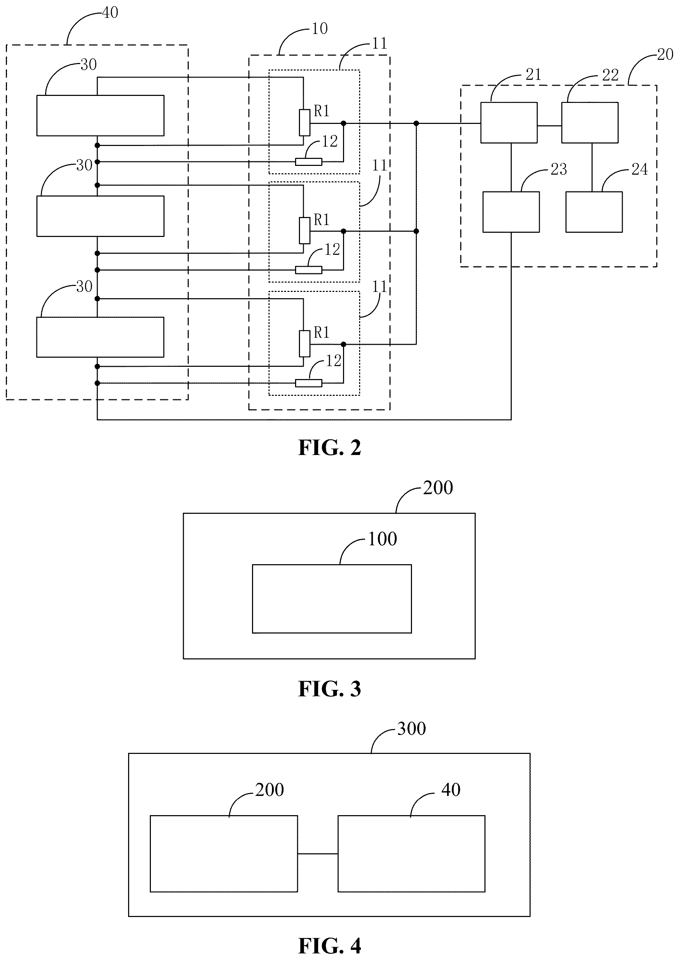

Optionally, FIG. 2 is a diagram illustrating the structure of a temperature acquisition device according to embodiments of the present application. Referring to FIG. 2, the acquisition module 10 also includes at least one first acquisition unit 11 connected to the cell 30 of the battery assembly 40 and the control module 20, and the at least one first acquisition unit 11 is configured to acquire the temperature information of the cell 30 and the first potential signal of the cell 30. The battery assembly 40 includes at least one cell 30.

The acquisition module 10 may include multiple first acquisition units 11 connected to the battery assembly 40. When the battery assembly 40 includes multiple cells 30 connected in series, the acquisition module 10 may be connected to the multiple cells 30 through one or more first acquisition units 11. Each first acquisition unit 11 can acquire the temperature information of the connected cell 30 and the first potential signal of the connected cell 30. Then the control module 20 can determine whether the position where each first acquisition unit 11 is connected is the preset position. This configuration can improve the accuracy of the temperature information acquired by the temperature acquisition device.

Optionally, still referring to FIG. 2, the first acquisition unit 11 includes a first resistor R1 and an acquisition probe 12. A first end of the first resistor R1 is connected to a first end of the cell 30. A second end of the first resistor R1 is connected to a second end of the cell 30. The first resistor R1 may be a thermistor. An interface end of the first resistor R1 is connected to the control module 20 by, for example, a battery management system (BMS). The first resistor R1 is configured to acquire the temperature information of the cell 30. A first end of the acquisition probe 12 is connected to the cell 30. A second end of the acquisition probe 12 is connected to the control module 20. The acquisition probe 12 is configured to acquire the first potential signal of the cell 30.

The first acquisition unit 11 acquires the temperature information of the cell 30 through the first resistor R1. The two ends of the first resistor R1 are connected to the positive electrode and the negative electrode of the cell 30 respectively to acquire the temperature information of the cell 30 connected to the first resistor R1. The acquisition probe 12 is connected between the control module 20 and the cell 30. The acquisition probe 12 can acquire the first potential signal of the cell 30 and output the first potential signal to the control module 20. Then, the control module 20 can determine whether the position of the first acquisition unit 11 is the preset position.

Optionally, still referring to FIG. 2, the control module 20 includes an acquisition unit 21 and a comparison unit 22. The acquisition unit 21 is connected to the first resistor R1 and the acquisition probe 12. The acquisition unit 21 is configured to acquire the temperature information and the first potential signal. The acquisition unit 21 is also configured to determine the voltage value of the cell 30 according to the potential difference between the first potential signal and a preset potential signal. The comparison unit 22 is connected to the acquisition unit 21. The comparison unit 22 is configured to compare the voltage value of the cell 30 with a preset voltage value and determine whether the position of the first acquisition unit 11 connected to the cell is the preset position according to the comparison result.

By way of example, the acquisition unit 21 acquires the temperature information and the first potential signals of the multiple cells 30 acquired by the multiple first acquisition units 11 and determines the voltage value of each cell 30 according to the potential difference between the first potential signal of each cell 30 and the preset potential signal. The comparison unit 22 compares the voltage value of each cell 30 with the preset voltage value and determines that the position of the first acquisition unit 11 is the preset position when the voltage value of the cell 30 is the same as the preset voltage value, and determines that the position of the first acquisition unit 11 deviates when the voltage value of the cell 30 is different from the preset voltage value. This configuration can improve the accuracy of the temperature information acquired by the temperature acquisition device.

Optionally, still referring to FIG. 2, the control module 20 also includes a second acquisition unit 23. The second acquisition unit 23 is connected to the first cell 30 at the head end of the battery assembly 40 or the first cell 30 at the tail end of the battery assembly 40. The second acquisition unit 23 is configured to acquire a second potential signal of the first cell 30 at the head end of the battery assembly 40 or the first cell 30 at the tail end of the battery assembly 40 and output the second potential signal as the preset potential signal to the acquisition unit 21.

The control module 20 may also be provided with the second acquisition unit 23 to determine the preset potential signal. The second acquisition unit 23 can be connected to the first cell 30 at the head end of the battery assembly 40 or the first cell 30 at the tail end of the battery assembly 40 and output the acquired second potential signal of the cell 30 as the preset potential signal to the acquisition unit 21. The potential difference between the second potential signal of the first cell 30 at the head end of the battery assembly 40 or the first cell 30 at the tail end of the battery assembly 40 and the first potential signal of any other cell 30 of the battery assembly 40 can be used to determine the voltage value of any other cell 30 of the battery assembly 40, so the second potential signal can be used as the preset potential signal. This configuration can improve the accuracy of the temperature information acquired by the temperature acquisition device.

Optionally, still referring to FIG. 2, the control module 20 also includes an alarm unit 24 connected to the comparison unit 22, and the alarm unit 24 is configured to send an alarm signal when the position of the acquisition module 10 deviates from the preset position.

The control module 20 may also be provided with the alarm unit 24. When the control module 20 determines that the voltage value of the cell 30 is different from the preset voltage value, the control module 20 determines that the position of the first acquisition unit 11 deviates from the preset position. In this case, the temperature information acquired by the first acquisition unit 11 is not the temperature information at the preset position, and the alarm unit 24 does not send an alarm signal to alert the operator. In this manner, the temperature acquisition device deviating from the preset position can be adjusted in time.

Optionally, still referring to FIG. 2, the first acquisition units 11 are in one-to-one correspondence with the cells 30 of the battery assembly 40.

The number of first acquisition units 11 of the acquisition module 10 may be configured according to the number of cells 30 of the battery assembly 40 so that the temperature information and the first potential signals of the multiple cells 30 can be acquired. This configuration can improve the efficiency of the temperature acquisition device in acquiring the temperature information and the first potential signal.

Optionally, still referring to FIG. 2, the control module 20 includes a controller in the battery management system.

The temperature acquisition device may be disposed in the battery management system. The controller in the battery management system is used as the control module 20. This configuration simplifies the temperature acquisition device and improves the acquisition efficiency of the temperature information and the adjustment effect of the battery assembly 40.

By way of example, when the acquisition module 10 is connected to the battery assembly 40, according to the number of cells 30 of the battery assembly 40, the acquisition module 10 is connected to the cells 30 corresponding to the first acquisition units 11. The first resistor R1 of each first acquisition unit 11 acquires the temperature information of the corresponding cell 30. The first acquisition unit 11 acquires the first potential signal at the position of the corresponding cell 30 and outputs the temperature information and the first potential signal to the control module 20. The second acquisition unit 23 of the control module 20 is connected to the first cell 30 at the head end of the battery assembly 40 or the first cell 30 at the tail end of the battery assembly 40 and outputs the acquired second potential signal of this cell 30 as the preset potential signal to the acquisition unit 21.

The acquisition unit 21 acquires the temperature information and the first potential signals of the multiple cells 30 acquired by the multiple first acquisition units 11 and determines the voltage value of each cell 30 according to the potential difference between the first potential signal of each cell 30 and the preset potential signal. The comparison unit 22 compares the voltage value of each cell 30 with the preset voltage value and determines that the position of the first acquisition unit 11 is the preset position when the voltage value of the cell 30 is the same as the preset voltage value and determines that the position of the first acquisition unit 11 deviates when the voltage value of the cell 30 is different from the preset voltage value.

When the position of the first acquisition unit 11 is the preset position, the control module 20 determines that the temperature information of the cell 30 is the temperature information at the preset position and adjusts the performance of the battery assembly 40 according to the temperature information of the cell 30. When the position of the first acquisition unit 11 deviates, the alarm unit 24 sends an alarm signal to alert the operator.

Optionally, FIG. 3 is a diagram illustrating the structure of a battery management system according to embodiments of the present application. Referring to FIG. 3, the battery management system 200 of this embodiment of the present application includes the temperature acquisition device 100 of any previous embodiment and has the effects of the temperature acquisition device 100 of any previous embodiment. The details are not repeated here.

Optionally, FIG. 4 is a diagram illustrating the structure of a battery device according to embodiments of the present application. Referring to FIG. 4, the battery device 300 of this embodiment of the present application includes the battery management system 200 and the battery assembly 40 and has the effects of the temperature acquisition device 100 of any previous embodiment. The details are not repeated here.

It is to be understood that various forms of the preceding flows may be used with steps reordered, added, or removed. For example, the steps described in the present application may be executed in parallel, in sequence, or in a different order as long as the desired results of the technical solutions in the present application are achieved. The execution sequence of these steps is not limited herein.

## Claims

1. A temperature acquisition device, comprising:
- an acquisition module configured to be connected to a cell of a battery assembly and acquire temperature information of the cell and a first potential signal of the cell; and
- a control module connected to the acquisition module, wherein the control module is configured to determine whether a position of the acquisition module is a preset position according to the first potential signal of the cell.

2. The temperature acquisition device of claim 1, wherein the acquisition module comprises:
- at least one first acquisition unit, wherein the least one first acquisition unit is configured to be connected to the cell of the battery assembly and the control module and configured to acquire the temperature information of the cell and the first potential signal of the cell;
wherein the battery assembly comprises at least one cell.

3. The temperature acquisition device of claim 2, wherein the first acquisition unit comprises:
- a first resistor and an acquisition probe;
wherein a first end of the first resistor is connected to a first end of the cell and a second end of the first resistor is connected to a second end of the cell, an interface end of the first resistor is connected to the control module, and the first resistor is configured to acquire the temperature information of the cell; and
the acquisition probe is configured to have a first end connected to the cell and a second end connected to the control module, and the acquisition probe is configured to acquire the first potential signal of the cell.

4. The temperature acquisition device of claim 3, wherein the control module comprises: an acquisition unit and a comparison unit;
wherein the acquisition unit is connected to the first resistor and the acquisition probe, and the acquisition unit is configured to acquire the temperature information and the first potential signal and determine a voltage value of the cell according to a potential difference between the first potential signal and a preset potential signal; and
the comparison unit is connected to the acquisition unit, and the comparison unit is configured to compare the voltage value of the cell with a preset voltage value and determine whether a position of the first acquisition unit connected to the cell is the preset position according to a comparison result.

5. The temperature acquisition device of claim 4, wherein the control module further comprises:
- a second acquisition unit connected to a first cell at a head end of the battery assembly or a first cell at a tail end of the battery assembly, wherein the second acquisition unit is configured to acquire a second potential signal of the first cell at the head end of the battery assembly or the first cell at the tail end of the battery assembly, and output the second potential signal as the preset potential signal to the acquisition unit.

6. The temperature acquisition device of claim 4, wherein the control module further comprises:
- an alarm unit connected to the comparison unit, wherein the alarm unit is configured to send an alarm signal when the position of the first acquisition unit connected to the cell deviates from the preset position.

7. The temperature acquisition device of claim 2 or 3, wherein the at least one first acquisition unit is in one-to-one correspondence with the at least one cell of the battery assembly.

8. The temperature acquisition device of claim 1 or 2, wherein the control module comprises a controller in a battery management system.

9. A battery management system, comprising the temperature acquisition device of any one of claims 1 to 8.

10. A battery device, comprising the battery management system of claim 9 and the battery assembly.
